# EUROPÄISCHE PATENTSCHRIFT

(11) **EP 1 948 920 B1**
(45) Veröffentlichungstag und Bekanntmachung des Hinweises auf die Patenterteilung: **15.08.2012**
(21) Anmeldenummer: 06804356.1
(22) Anmeldetag: 19.10.2006
(51) Int. Cl.: F02C 6/12, F01D 25/14, F01D 9/02

(54) **ABGASTURBOLADER FÜR EINE BRENNKRAFTMASCHINE**
EXHAUST GAS TURBOCHARGER FOR AN INTERNAL COMBUSTION ENGINE
TURBOCOMPRESSEUR À GAZ D'ÉCHAPPEMENT POUR MOTEUR À COMBUSTION INTERNE

(30) Priorität: 15.11.2005 AT 18632005; 15.11.2005 AT 18622005
(43) Veröffentlichungstag der Anmeldung: 30.07.2008
(73) Patentinhaber: AVL List GmbH, 8020 Graz (AT)
(72) Erfinder: HRAUDA, Gabor, A-8054 Graz (AT); SEITZ, Hans, Felix, A-8044 Graz (AT); DREISBACH, Rolf, A-8052 Graz (AT)
(74) Vertreter: Babeluk, Michael
(86) Internationale Anmeldenummer: PCT/AT2006/000428
(87) Internationale Veröffentlichungsnummer: WO 2007/056780

(56) Entgegenhaltungen:
- CH-A- 416 920
- DE-A1- 2 257 793
- DE-A1- 2 420 308
- DE-A1- 10 325 980
- US-A- 2 384 251

## Beschreibung

Die Erfindung betrifft einen Abgasturbolader für eine Brennkraftmaschine mit einer Abgasturbine und einem Ladeluftverdichter, mit zumindest einem Ladeluftkanal, welcher über zumindest eine Wärmeübergangsfläche an eine Kühleinrichtung für die Ladeluft grenzt, wobei im Ladeluftkanal des Ladeluftverdichters zumindest ein die Wärmeübergangsfläche vergrößerndes Mittel vorgesehen ist, welches durch zumindest eine im Ladeluftkanal angeordnete Kühlrippe gebildet ist.

Aus der DE 10 235 189 A1 und der EP 1 384 857 A2 ist es bekannt, den Ladeluftverdichter eines Abgasturboladers mit einem Kühlwassermantel zu umgeben. Dadurch kann Bauraum und Herstellungs- und Montagekosten für einen separaten Ladeluftkühler eingespart werden. In bestimmten Motorbetriebsbereichen und Anwendungsfällen ist die Kühlleistung allerdings nicht ausreichend.

Die US 2,384,251 A offenbart einen flüssigkeitsgekühlten Abgasturbolader, wobei im Bereich der Auslassspirale Schaufeln angeordnet sind, welche unter anderem die Aufgabe haben, die Ladeluft zu kühlen und Wärme abzuleiten.

Die CH 419 920 A beschreibt ein Gebläseaggregat zur Abgasturboaufladung einer Brennkraftmaschine, wobei die Ladeluft am Ausgang des Abgasturboladers einen durch ein ringförmig angeordnetes Rohrbündel gebildeten Wärmetauscher passiert.

Weiters ist aus der DE 2 420 308 A1 ein Abgasturbolader für eine Brennkraftmaschine bekannt, wobei die Austrittsspirale von einem Kühlmittelkanal umgeben ist, in welchen Kühlrippen hineinragen.

Aufgabe der Erfindung ist es, diesen Nachteil zu vermeiden und die Kühlleistung bei einem Abgasturbolader der eingangs genannten Art zu erhöhen.

Erfindungsgemäß wird dies dadurch erreicht, dass die Kühlrippe in Längsrichtung des Ladeluftkanals schraubenförmig verdrillt ist. Zusätzlich dazu ist es auch möglich, dass im Ladeluftkanal zumindest ein von einem Kühlmedium durchströmtes Rohr angeordnet ist.

Um den Ladeluftdurchsatz nicht nachteilig zu beeinträchtigen ist es vorteilhaft, wenn die Kühlrippe und/oder das Kühlrohr strömungsgünstig geformt ist. Die Kühlleistung kann weiters erhöht werden, wenn das Rohr schraubenförmig verdrillt ist.

Die besten Kühlergebnisse lassen sich erzielen, wenn die Rippen und/oder Rohre gleichmäßig am Umfang des Ladeluftkanals angeordnet sind.

Eine weitere Verbesserung der Kühlung der Ladeluft kann erreicht werden, wenn zumindest ein an den Ladeluftverdichter anschließendes Ladeluftrohr durch die Kühleinrichtung gekühlt ist.

Der Kühlkreislauf des Ladeluftverdichters kann mit dem Motorkreislauf kombiniert oder getrennt von diesem ausgebildet sein. Insbesondere im letzten Fall kann die Kühleinrichtung primärseitig durch Luft und sekundärseitig durch ein Kühlmittel erfolgen.

Die Erfindung wird im Folgenden anhand der Figur näher erläutert.

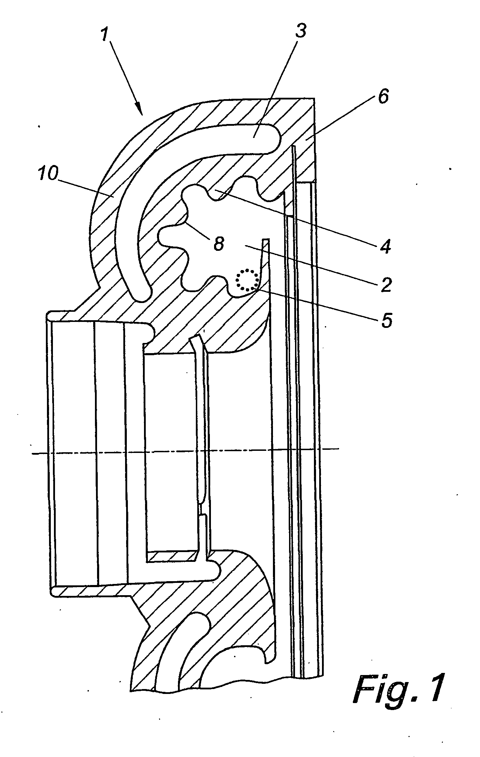

Die Fig. 1 zeigt einen Längsschnitt durch den Ladeluftverdichter 10 eines Abgasturboladers 1. Mit Bezugszeichen 6 ist das spiralförmige Verdichtergehäuse des Abgasturboladers 1 bezeichnet. Der Ladeluftkanal 2 des Abgasturboladers 1 ist zumindest teilweise von einem Kühlmittelmantel 3 umgeben, welcher eine Kühleinrichtung 7 für den Ladeluftverdichter 10 bildet.

Die Kühleinrichtung 7 grenzt über zumindest eine Wärmeübergangsfläche 8 an den Ladeluftkanal 2. Am Umfang des Kühlkanals 2 sind darüber hinaus Kühlrippen 4 angeordnet, um den Wärmeübergang zwischen der Ladeluft und dem Kühlmittel zu erhöhen. Zusätzlich zu den Kühlrippen 4 können auch in Längsrichtung des Kühlkanals 2 verlaufende Kühlrohre 5 im Kühlkanal 2 angeordnet sein. Kühlrohre 5 können genan wie die kühlrippen 4 in Längsrichtung des Ladeluftkanals 2 schraubenförmig verdrillt ausgebildet sein, um die Wärmeabfuhr weiter zu verbessern.

Der Kühlmittelmantel 3 und/oder die Kühlrohre 5 werden von einem Kühlmedium, beispielsweise Kühlwasser oder Luft, durchströmt. Die Kühleinrichtung 7 kann dabei mit dem Kühlkreislauf der Brennkraftmaschine verbunden sein. Es ist aber auch möglich, dass die Kühleinrichtung 7 separat zum Motorkühlkreislauf ausgebildet ist.

Mit der vorliegenden Erfindung ist es möglich, den Ladeluftkühler und das Röhrenwerk zum Ladeluftkühler zu ersetzen, wodurch ein einfacheres und kostengünstigeres Kühlsystem für die Ladeluft bereitgestellt wird. Das System ist insbesondere für zweistufige Aufladung (Niederdruckstufe) oder für niedrig aufgeladene Motoren mit moderatem Kühlbedarf geeignet.

## Patentansprüche

1. Abgasturbolader (1) für eine Brennkraftmaschine mit einer Abgasturbine und einem Ladeluftverdichter (10), mit zumindest einem Ladeluftkanal (2), welcher über zumindest eine Wärmeübergangsfläche (8) an eine Kühleinrichtung (7) für die Ladeluft grenzt, wobei im Ladeluftkanal (2) des Ladeluftverdichters (10) zumindest ein die Wärmeübergangsfläche (8) vergrößerndes Mittel vorgesehen ist, welches durch zumindest eine im Ladeluftkanal (2) angeordnete Kühlrippe (4) gebildet ist, **dadurch gekennzeichnet, dass** die Kühlrippe (4) in Längsrichtung des Ladeluftkanals (2) schraubenförmig verdrillt ist.

2. Abgasturbolader (1) nach Anspruch 1, **dadurch gekennzeichnet, dass** im Ladeluftkanal (2) zumindest ein von einem Kühlmedium durchströmtes Rohr (5) angeordnet ist.

3. Abgasturbolader (1) nach Anspruch 1 oder 2, **dadurch gekennzeichnet, dass** das Rohr (5) schraubenförmig verdrillt ist.

4. Abgasturbolader (1) nach einem der Ansprüche 1 bis 3, **dadurch gekennzeichnet, dass** die Kühlrippe (4) und/oder das Rohr (5) strömungsgünstig geformt ist.

5. Abgasturbolader (1) nach einem der Ansprüche 1 bis 4, **dadurch gekennzeichnet, dass** die Rippen (4) und/oder Rohre (5) gleichmäßig am Umfang des Ladeluftkanals (2) angeordnet sind.

6. Abgasturbolader (1) nach einem der Ansprüche 1 bis 5, **dadurch gekennzeichnet, dass** zumindest ein an den Ladeluftkanal (2) anschließendes Ladeluftrohr durch die Kühleinrichtung (7) gekühlt ist.

7. Abgasturbolader (1) nach einem der Ansprüche 1 bis 6, **dadurch gekennzeichnet, dass** die Kühleinrichtung (7) des Ladeluftverdichters (10) und/ oder des Ladeluftrohres mit dem Motorkühlkreis verbunden ist.

8. Abgasturbolader (1) nach einem der Ansprüche 1 bis 6, **dadurch gekennzeichnet, dass** die Kühleinrichtung (7) des Ladeluftverdichters (10) und/ oder des Ladeluftrohres vom Motorkühlkreislauf getrennt ist.

## Claims

1. An exhaust-gas turbocharger (1) for an internal combustion engine, comprising an exhaust-gas turbine and a charge air compressor (10), at least one charge air duct (2) which borders a cooling device (7) for the charge air via at least one heat transfer area (8), with at least one means being provided in the charge air duct (2) of the charge air compressor (10) for increasing the heat transfer area (8), which means is formed by at least one cooling rib (4) arranged in the charge air duct (2), **characterised in that** the cooling rib (4) is twisted in a screw-like manner in the longitudinal direction of the charge air duct (2).

2. An exhaust-gas turbocharger (1) according to claim 1, **characterised in that** at least one tube (5) is arranged in the charge air duct (2), with a cooling medium flowing through said tube.

3. An exhaust-gas turbocharger (1) according to claim 1 or 2, **characterised in that** the tube (5) is twisted in a screw-like manner.

4. An exhaust-gas turbocharger (1) according to one of the claims 1 to 3, **characterised in that** the cooling rib (4) and/or the tube (5) are shaped in a streamlined manner.

5. An exhaust-gas turbocharger (1) according to one of the claims 1 to 4, **characterised in that** the ribs (4) and/or tubes (5) are evenly arranged on the circumference of the charge air duct (2).

6. An exhaust-gas turbocharger (1) according to one of the claims 1 to 5, **characterised in that** at least one charge air tube adjacent to the charge air duct (2) is cooled by the cooling device (7).

7. An exhaust-gas turbocharger (1) according to one of the claims 1 to 6, **characterised in that** the cooling device (7) of the charge air compressor (10) and/or the charge air tube is connected with the engine cooling circuit.

8. An exhaust-gas turbocharger (1) according to one of the claims 1 to 6, **characterised in that** the cooling device (7) of the charge air compressor (10) and/or the charge air tube is separated from the engine cooling circuit.

## Revendications

1. Turbocompresseur à gaz d'échappement de moteur à combustion interne comportant une turbine à gaz d'échappement et un compresseur d'air d'alimentation (10), ou un canal d'air d'alimentation (2) adjacent à une installation de refroidissement (7) de l'air d'alimentation par au moins une surface d'échange de chaleur (8),
* le canal d'air d'alimentation (2) du compresseur d'air d'alimentation (10) ayant au moins un moyen agrandissant la surface d'échange de chaleur (8), ce moyen étant constitué par au moins une nervure de refroidissement (4) dans le canal d'air d'alimentation (2), turbocompresseur à gaz d'échappement
**caractérisé en ce que**
la nervure de refroidissement (4) est vrillée en hélice dans la direction longitudinale du canal d'air d'alimentation (2).

2. Turbocompresseur à gaz d'échappement selon la revendication 1,
**caractérisé en ce qu'**
au moins un tube (5) traversé par un milieu de refroidissement est logé dans le canal d'air d'alimentation (2).

3. Turbocompresseur à gaz d'échappement selon la revendication 1 ou 2,
**caractérisé en ce que**
le tube (5) est vrillé en hélice.

4. Turbocompresseur selon l'une des revendications 1 à 3,
**caractérisé en ce que**
la nervure de refroidissement (4) et/ou le tube (5) ont une forme aéraulique.

5. Turbocompresseur selon les revendications 1 à 4,
**caractérisé en ce que**
les nervures (4) et/ou les tubes (5) sont répartis régulièrement à la périphérie du canal d'air d'alimentation (2).

6. Turbocompresseur selon les revendications 1 à 5,
**caractérisé en ce qu'**
au moins un tube d'air d'alimentation relié au canal d'air d'alimentation (2) est refroidi par l'installation de refroidissement (7).

7. Turbocompresseur selon l'une des revendications 1 à 6,
**caractérisé en ce que**
l'installation de refroidissement (7) du compresseur d'air d'alimentation (10) et/ou du tube d'air d'alimentation est reliée au circuit de refroidissement du moteur.

8. Turbocompresseur selon les revendications 1 à 6,
**caractérisé en ce que**
l'installation de refroidissement (7) du compresseur d'air d'alimentation (10) et/ou du tube d'air d'alimentation est séparée du circuit de refroidissement du moteur.
